# EUROPÄISCHE PATENTSCHRIFT

(11) **EP 1 101 040 B1**
(45) Veröffentlichungstag und Bekanntmachung des Hinweises auf die Patenterteilung: **21.03.2007**
(21) Anmeldenummer: 99930975.0
(22) Anmeldetag: 23.07.1999
(51) Int. Cl.: F16C 29/06, F16C 33/66

(54) **WAGEN EINER LINEARFÜHRUNG**
CARRIAGE FOR LINEAR GUIDING DEVICE
CHARIOT DE DISPOSITIF DE GUIDAGE LINEAIRE

(30) Priorität: 31.07.1998 CH 161798
(43) Veröffentlichungstag der Anmeldung: 23.05.2001
(73) Patentinhaber: Schneeberger Holding AG, 4914 Roggwil (CH)
(72) Erfinder: MISCHLER, Ernst, CH-4914 Roggwil (CH)
(74) Vertreter: EGLI-EUROPEAN PATENT ATTORNEYS
(86) Internationale Anmeldenummer: PCT/CH1999/000341
(87) Internationale Veröffentlichungsnummer: WO 2000/008344

(56) Entgegenhaltungen:
- FR-A- 2 434 955
- US-A- 4 576 420
- US-A- 5 161 896
- US-A- 5 800 064

## Beschreibung

Die Erfindung betrifft einen Wälzkörperumlauf eines Wagens einer Linearbewegungsführung, wobei der Wagen zur Anordnung auf einer Schiene vorgesehen ist, der einen Mittelabschnitt und zwei sich jeweils an den Mittelabschitt anschliessende Schenkel aufweist, wodurch der Wagen im Querschnitt im wesentlichen U-förmig ausgebildet ist. Der Wagen weist im Bereich der beiden Schenkel normalerweise zumindest jeweils einen Wälzkörperumlauf auf, wobei jeder Wälzkörperumlauf einen Rücklaufkanal, einen Tragbereich sowie zwei den Rücklaufkanal und den Tragbereich miteinander verbindende Umlenkkanäle aufweist. In einem Grundkörper des Wagens sind in Ausnehmungen von Rücklaufkanälen hülsenförmige Führungsmittel angeordnet, und die Führungsmittel sind mit einer Lauffläche für Wälzkörper versehen.

Wälzlagerlinearführungen werden in vielen Bereichen der Technik eingesetzt, in denen ein Bauteil gegenüber einem anderen Bauteil geradlinig und möglichst ohne Reibungsverluste bewegt werden soll. Ein Beispiel hierfür sind Werkzeugmaschinen. Derartige Führungen weisen einen Wagen oder Schlitten auf, der über Wälzkörper, wie Kugeln, Rollen oder Nadeln, an einer Schiene geführt ist. Die Wälzkörper zirkulieren hierbei in in sich geschlossenen Wälzkörperumläufen des Wagens. Die Wälzkörperumläufe weisen üblicherweise eine Tragzone auf, in welcher die Wälzkörper an einer Tragfläche des Wagens und an der Schiene anliegen und hierdurch die zu bewegende Last tragen. Durch die Linearbewegung des Wagens gelangen die Wälzkörper aus der Tragzone in einen ersten Umlenkkanal, in dem die Wälzkörper von der Tragzone in den Rücklaufkanal überführt werden. Nach Durchlaufen des Rücklaufkanals gelangen die Wälzkörper über einen zweiten Umlenkkanal wieder in die Tragzone.

Insbesondere um den Verschleiss der Wälzkörper zu minimieren und um die Laufruhe einer Linearführung zu verbessern, ist es bereits seit langem bekannt, die Flächen des Wagens, mit denen die Wälzkörper in Kontakt kommen, durch Kunststoffbauteile zu bilden. So wird beispielsweise in der DE 35 40 099 beschrieben, die Führungsflächen des Rücklaufkanals als gesondert hergestellte Hülsen vorzusehen, die später in entsprechende Ausnehmungen des metallischen Grundkörpers des Wagens eingefügt werden. Bei dieser Konstruktion kann als nachteilig empfunden werden, dass eine genaue Fertigung und eine sehr exakte und aufwendige Montage nötig ist. Zudem entstehen an dieser zweiteiligen Hülsenausführung zusätzliche Übergänge, die die Laufruhe beeinträchtigen können.

Desweiteren wird in der DE 43 31 014 C2 beschrieben, Führungsmittel in den Tragzonen und den Rücklaufkanälen dadurch zu erzeugen, dass an den metallischen Grundkörper des Wagens die Führungsflächen in einem Kunststoffspritzverfahren direkt angespritzt werden. Die beim Spritzverfahren auftretenden Schwindvorgänge des Kunststoffteils des Rücklaufkanals können allerdings nachteilige Auswirkungen auf die Fertigungsgenauigkeit haben. Soweit diese überhaupt vermieden bzw. kompensiert werden können, ist hierzu ein erheblicher Aufwand erforderlich. Ausserdem benötigt diese Lösung zusätzliche Verankerungen der "eingespritzten" Hülse am Grundkörper des Wagens. Bei den beiden angegebenen vorbekannten Wagen ist zudem eine relativ aufwendige Schmiermittelversorgung erforderlich.

In der gattungsbildenden JP-A-9072335 wird vorgeschlagen, bei einem Wagen für ein Linearführungssystem ein hülsenförmiges Führungsmittel vorzusehen, das mit ringförmigen Stegen im Bereich der beiden Enden in den Ausnehmungen eines Grundkörpers oder in Ausnehmungen in ringförmigen Vorsprüngen von Endkappen fixiert ist.

Der Erfindung liegt die Aufgabe zugrunde einen Wälzkörperumlauf für einen Wagen zu schaffen, der bezüglich seiner Fertigung und Montage einfacher aufgebaut ist und trotzdem eine gute Laufruhe ermöglicht. Die Erfindung soll gemäss einem weiteren Aspekt eine konstruktiv einfache Schmierung der Wälzkörper ermöglichen.

Dazu muss das hülsenförmige Führungsmittel genau und sicher fixiert werden, wobei die Anforderungen an die Laufruhe eingehalten werden sollten.

Die Aufgabe wird bei einem eingangs erwähnten Wälzkörperumlauf gemäss Anspruch 1 dadurch gelöst, dass däs Führungsmittel an zumindest einem seiner beiden Enden zur Fixierung in der Ausnehmung mit Kunststoff ganz oder teilweise umgossen ist.

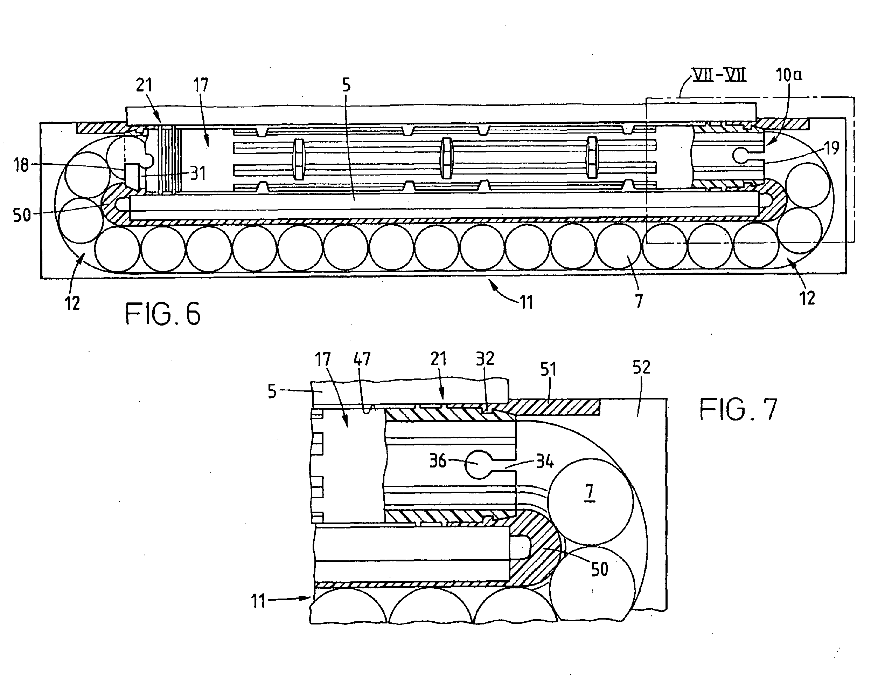

Ein Wälzkörperumlauf mit einem derartigen Führungsmittel ist in den beigefügten Figuren 6 und 7 dargestellt.

In einer bevorzugten Ausgestaltung ist der kunststoff, mit dem zumindest eine der beiden Enden des hülsenförmigen Führungsmittels umgossen ist, Bestandteil des Umlenkkanals. Da Führungsmittel des Rücklaufkanals vorzugsweise zusammen mit Rückhaltemitteln der Tragzone in einem Spritzgussvorgang erzeugt werden, kann auch der Kunststoff, der das hülsenförmige Führungsmittel an zumindest einem seiner Enden umgibt, einstückig mit der Tragzone verbunden sein. Dadurch lässt sich eine Zentrierung und Fixierung des Führungsmittels des Rücklaufkanals im gleichen Kunststoffspritzgussarbeitsgang erzeugen, in dem auch die Rückhaltemittel und der entsprechende Teil von einem oder beiden Rücklaufkanälen eines Wälzkörperumlaufs hergestellt wird. Ausserdem lässt sich dadurch besonders gut ein vorbestimmter Abstand zwischen der Längsachse des Rücklaufkanals und einer Längsachse der Tragzone einhalten.

Bei einem erfindungsgemässen Wagen einer Linearbewegungsführung sollte das als Hülse ausgebildete Führungsmittel des Rücklaufkanals zwischen Auflagerstellen mit Abstand zur Ausnehmung angeordnet sein, so dass sich zwischen dem Führungsmittel und der Ausnehmung ein Hohlraum ausbildet. Anders als beispielsweise bei der vorbekannten DE 35 40 099 kann sich dadurch die Hülse in der Ausnehmung quer zu ihrer Längsachse elastisch durchbiegen. Die Grösse der Durchbiegung wird durch einen Kontakt zwischen der Hülse und der Begrenzungsfläche der Ausnehmung limitiert. Eine solche Bewegung kann beispielsweise aufgrund von Schwingungen oder Vibrationen entstehen, die durch die zirkulierenden Wälzkörper in der Hülse hervorgerufen werden. Im Gegensatz zu bisher üblichen Lösungen ist bei erfindungsgemässen Wälzkörperumläufen der Rücklaufkanal so ausgebildet, dass zumindest geringfügige Schwingungen bzw. Auslenkungen des Führungsmittels möglichst auftreten. Es werden also bewusst Schwingungen in Kauf genommen und zur Erzielung von bestimmten Wirkungen genutzt.

Es hat sich gezeigt, dass die elastische Durchbiegung der Hülse zu einer besseren Laufruhe der erfindungsgemässen Linearbewegungsführung führt. Ausserdem kann die Durchbiegung zur Förderung von Schmiermittel genutzt werden, das - vor der ersten Inbetriebnahme des Wagens - in den Raum zwischen der Ausnehmung und der Umfangsfläche der Hülse über die gesamte Länge zwischen den beiden Stegbereichen eingefüllt und diesen vorzugsweise vollständig ausfüllt. Es hat sich gezeigt, dass dieser Raum ausreichend gross sein kann, um für den jeweiligen Wälzkörperumlauf einen Schmiermittelvorrat zur Verfügung zu haben, der für die übliche Lebensdauer von Linearbewegungsführungen ausreichend ist.

In bevorzugten Ausgestaltungen der Erfindung weist die Wand der Hülse mehrere Durchbrüche auf, durch die Schmiermittel in das Innere der Hülse gelangen kann. Damit ein möglichst guter Schmiermittelfluss erreichbar ist, hat es sich als besonders vorteilhaft erwiesen, wenn zumindest einer der Durchbrüche in jenem Bereich angeordnet ist, in dem die Hülse die grösste radiale Auslenkung erfährt. In der Regel ist dieser Bereich - hinsichtlich ihrer Längserstreckung - die Mitte der Hülse.

Trotz der Durchtrittsöffnungen und der elastischen Auslenkbarkeit des Führungsmittels sollte die Querschnittsform des jeweiligen Rücklaufkanals während der Zirkulation der Wälzkörper möglichst konstant sein, um eine sichere und möglichst reibungsarme Führung der Wälzkörper im Wälzkörperumlauf sicherzustellen. Insbesondere aus diesem Grund können die Durchtrittsöffnungen im wesentlichen quer zur Längsachse des Rücklaufkanals verlaufen. Ausserdem sollte sich eine Längserstreckung einer jeden Durchtrittsöffnung über höchstens die Hälfte, vorzugsweise höchstens ein Viertel, des Umfangs des Führungsmittels erstrecken.

Es hat sich als zweckmässig erwiesen, wenn das Führungsmittel in der Ausnehmung des Grundkörpers des Wagens im Bereich deren beiden Enden gelagert ist und dazwischen über seinen gesamten Umfang mit Abstand zur Begrenzungsfläche der Ausnehmung angeordnet ist. Hierdurch können besonders grosse Auslenkungen des Führungsmittels - und damit auch eine besonders gute Förderung von Schmiermittel ins Innere des Führungsmittels - erzielt werden.

Schliesslich ist es auch.bevorzugt, wenn an der Umfangsfläche der Hülse mehrere Nuten eingebracht sind, die als Schmiermitteltaschen genutzt werden können. Hiermit ist es möglich den zwischen der Begrenzungsfläche der Ausnehmung des Grundkörpers und der Hülse einbringbaren Schmiermittelvorrat weiter zu vergrössern, ohne die maximale Auslenkbarkeit der Hülse vergrössern zu müssen. Diese bestimmt sich durch den zwischen der Ausnehmung und der dicksten Stelle der Wand der Hülse sich ausbildenden Spalt.

In einer weiteren zweckmässigen Ausführungsform der Erfindung kann vorgesehen sein, dass der Wagen mit einem Schmiermittelreservoir versehen ist, von dem aus während des Einsatzes des Wagens, Schmiermittel in den ring- bzw. hülsenförmigen Spalt zwischen der Ausnehmung und der Hülse gefördert wird. Anders als bei den meisten vorbekannten Wagen, erfolgt dann der Eintritt des Schmiermittels nicht im Bereich der Umlenkung des entsprechenden Wälzkörperumlaufs, sondern über den Rücklaufkanal.

Weitere bevorzugte Ausgestaltungen der Erfindung ergeben sich aus den Patentansprüchen.

Die Erfindung wird anhand von den in den Figuren schematisch dargestellten Ausführungsbeispielen näher erläutert; es zeigen:
- Fig. 1: eine Linearbewegungsführung mit einem Wagen und einer Schiene in einer perspektivischen Darstellung;
- Fig. 2: eine Linearbewegungsführung in einer Schnittdarstellung entlang der Linie II - II;
- Fig. 3: eine Schnittdarstellung eines Rücklaufkanals im Grundkörper des Wagens von Fig. 2;
- Fig. 4: ein hülsenförmiges Führungsmittel in einer Seitenansicht;
- Fig. 5: eine Querschnittsdarstellung der Hülse aus Fig. 4;
- Fig. 6: eine Querschnittsdarstellung durch einen Wälzkörperumlauf des erfindungsgemässen Wagens mit einem teilweise geschnitten dargestellten Führungsmittel des Rücklaufkanals;
- Fig. 7: eine vergrösserte Darstellung des Ausschnittes VII - VII aus Fig. 6.

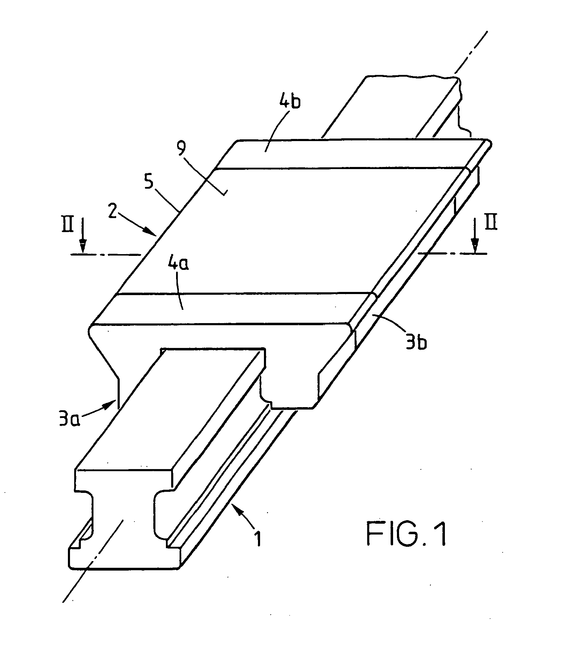

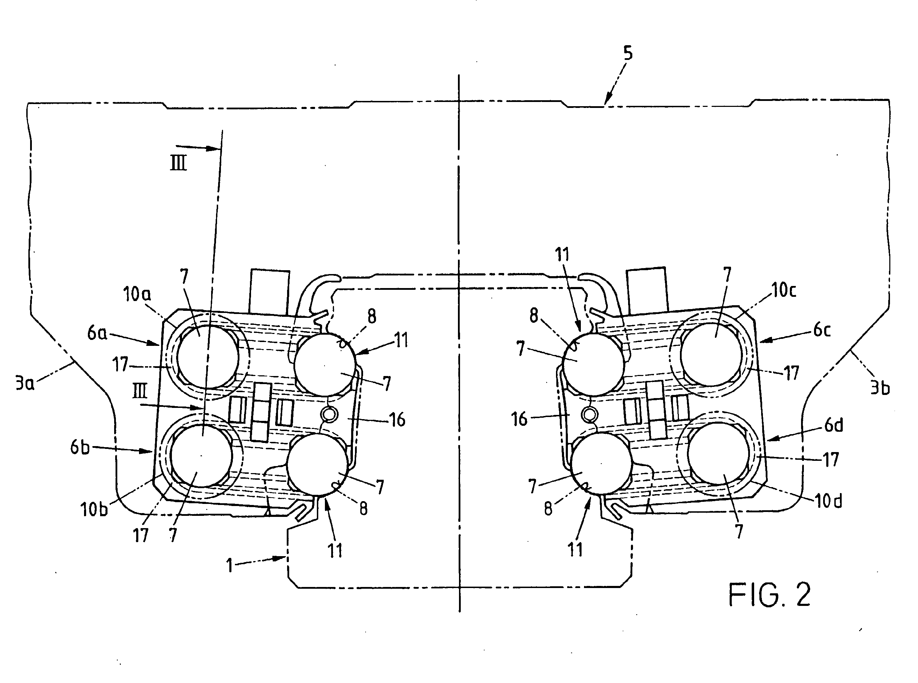

In Fig. 1 ist eine Linearbewegungsführung gezeigt, die eine profilierte Führungsschiene 1 aufweist, auf der sich ein Wagen 2 abstützt und längsverschiebbar angeordnet ist. Wie auch Fig. 2 entnommen werden kann, ist der Wagen 2 im Querschnitt im wesentlichen U-förmig ausgebildet und umgreift mit zwei sich an einen Mittelabschnitt anschliessenden Schenkeln 3a, 3b die Schiene 1. An den Stirnseiten des Wagens sind Kappen 4a, 4b angebracht, die an einem metallischen Grundkörper 5 des Wagens lösbar befestigt sind. Eine Oberseite des Wagens 2 ist als Montagefläche 9 vorgesehen, auf der eine zu bewegende Last befestigt werden kann.

Der Wagen stützt sich über Wälzkörper 7, die in vier jeweils in sich geschlossenen Umläufen 6a, 6b, 6c, 6d angeordnet sind, auf seitlichen Tragflächen 8 der Führungsschiene 1 ab. Im dargestellten Ausführungsbeispiel sind Kugeln als Wälzkörper 7 vorgesehen. Die Tragflächen 8 sind profiliert, so dass eine Linienberührung zwischen den Kugeln und der Führungsschiene entsteht.

Im metallischen Grundkörper 5 sind vier zylindrische Ausnehmungen 10a, 10b, 10c, 10d eingebracht, deren jeweilige Längsachse parallel zur Längsachse der Schiene 1 verläuft. Jede dieser Ausnehmungen 10a - 10d ist Bestandteil von einem der Wälzkörperumläufe 6a - 6d, die zudem jeweils eine Tragzone 11 und zwei jeweils die Enden der Ausnehmung und der Tragzone miteinander verbindende Umlenkkanäle aufweisen. Hierbei sind die Umlenkkanäle von den Stirnkappen 4a, 4b abgedeckt. In der Darstellung von Fig. 2 ist zu erkennen, dass in der Tragzone 11 Rückhaltemittel 16 vorhanden sind, mit denen die Kugeln einerseits geführt und andererseits vor einem Herausfallen aus dem Wagen 2 gehindert werden. Diese Rückhaltemittel 16 können durch ein Kunststoffspritzgiessverfahren direkt an den Grundkörper "angespritzt" werden.

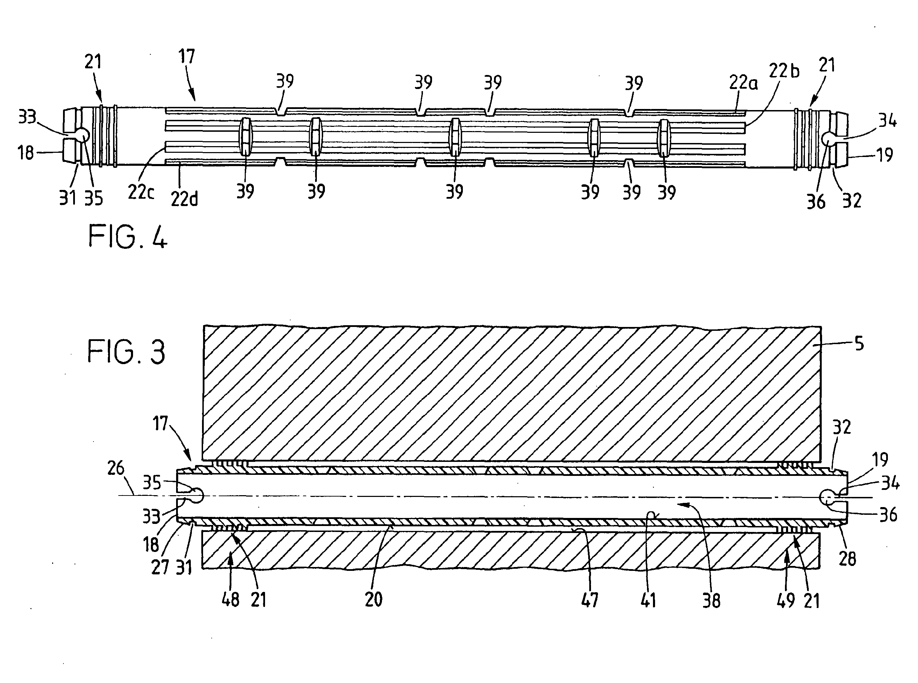

Wie insbesondere den Fig. 2 und 3 entnommen werden kann, ist in jeder Ausnehmung ein im wesentlichen als zylindrische Hülse 17 ausgebildetes Führungsmittel für die Wälzkörper angeordnet. Die beispielsweise aus Kunststoff bestehende, vorzugsweise einstückige, Hülse weist jeweils im Bereich ihrer beiden Enden 18, 19 an ihrer äusseren Umfangsfläche 20 vier umlaufende Stege 21 auf. Selbstverständlich wäre es auch möglich, mehr oder weniger als jeweils vier Stege vorzusehen. Die Stege 21 dienen unter anderem dazu, die Hülse 17 in der jeweiligen Ausnehmung des Grundkörpers 5 zu zentrieren, wodurch eine Längsachse 26 der Hülse 17 mit einer Symmetrieachse der jeweiligen Ausnehmung fluchtet. Die Hülse ist bezüglich sämtlichen (imaginären) Ebenen, in denen die mittige Längsachse 26 der Hülse liegt, symmetrisch aufgebaut. Sie ist ausserdem bezüglich einer weiteren (imaginären) Ebene symmetrisch, gegenüber der die Längsachse 26 orthogonal ausgerichtet ist und die Hülse in zwei gleich lange Hälften teilt.

Zwischen den beiden Enden und zwar im wesentlichen mittig zwischen den beiden Bereichen, in denen die Stege 21 angeordnet sind, weist die Hülse 17 an ihrer äusseren Umfangsfläche 20 mehrere, gleichmässig über den Umfang der Hülse verteilte Nuten 22a, 22b, 22c, 22d, auf, die sich im wesentlichen parallel zur Längsachse 26 der Hülse 17 erstrecken. Die Nuten werden jeweils durch eine Grundfläche 23 sowie durch Seitenflächen 24, 25 begrenzt und haben die Funktion von Schmiermitteltaschen. Es ist somit erfindungsgemäss vorgesehen, ausserhalb des Führungsmittels, im Bereich der Umfangsfläche der Hülse 17, ein Schmiermittelvorrat zu deponieren. Die Länge der Nuten beträgt in etwa ¾ von der Gesämtlänge der Hülse.

Zwischen den Stegen 21 und jeweils den beiden Enden 18, 19 ist auf einem konisch geneigten Abschnitt 27, 28 der Umfangsfläche 20 der Hülse eine am Umfang umlaufende Nut 31, 32 eingebracht. Ferner ist jedes der beiden Enden mit zwei sich diametral gegenüberliegenden Schlitzen 33, 34 versehen, die jeweils in eine kreisrunde Ausnehmung 35, 36 der Wand 37 münden.

Die Hülse 17 weist ferner mehrere sich trichterförmig ins Innere 38 der Hülse 17 verjüngende und hineinmündende Durchtrittsöffnungen 39 der Wand 37 auf. Zwei sich gegenüberliegende Seitenwände einer Durchtrittsöffnung 39 verbinden jeweils zwei Nuten miteinander. Es haben somit jeweils zumindest zwei nebeneinanderliegende Nuten über zumindest eine Durchtrittöffnung 39 einen gemeinsamen Schmiermittelzufluss in das Innere der Hülse 17. Im dargestellten Ausführungsbeispiel ist jede Nut über fünf Durchtrittsöffnungen mit dem Inneren 38 der Hülse 17 verbunden. Vorzugsweise sämtliche Durchtrittsöffnungen 39 sind mit einer Längserstreckung im wesentlichen quer zu den Schmiermitteltaschen bzw. zur Längsachse 26 der Hülse ausgerichtet. Die Grösse der Durchtrittsöffnung 39 kann so auf das vorgesehene Schmiermittel abgestimmt sein, dass ein "Kapillareffekt" entsteht, der zur Förderung des Schmiermittels in das Innere der Hülse 17 genutzt wird. Dies bedeutet, dass die Querschnittsfläche bzw. eine Breite der Durchtrittsöffnung auf die Dichte eines flüssigen Schmiermittels - und damit auf die sich in dem Schmiermittel einstellende Oberflächenspannung - abgestimmt sein kann. Dies kann bewirken, dass bereits die Oberflächenspannung alleine oder in Kombination mit einem anderen Effekt, beispielsweise den beschriebenen Schwingungen der Hülse, Schmiermittel in Richtung des Inneren der Hülse fördert.

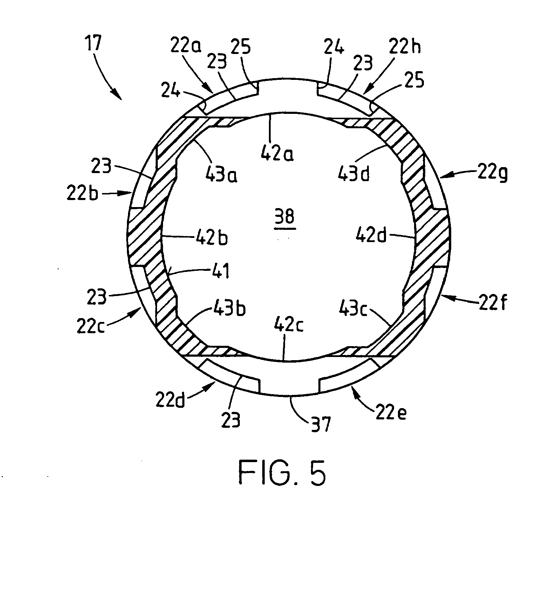

Eine innere Begrenzungsfläche 41 der Wand 37 ist zur Führung der Wälzkörper vorgesehen, wozu die Begrenzungsfläche 41 einen über die gesamte Länge der Hülse 17 im wesentlichen konstanten Querschnitt aufweist. Auch die innere Begrenzungsfläche 41 der Hülse ist profiliert, wodurch sie von einer - hinsichtlich des Querschnitts - (vollständigen) Kreisform abweicht. Wie insbesondere in der Querschnittsdarstellung von Fig. 5 zu erkennen ist, weist auch die innere Begrenzungsfläche 41 zwischen Kreissegmenten 42a, 42b, 42c, 42d, auf denen sich die Wälzkörper abwälzen, mehrere Vertiefungen 43a, 43b, 43c, 43d auf. Wie die Kreissegmente 42a - 42d erstrecken sich auch die Vertiefungen 43a - 43d parallel zur Mittelachse. Die Vertiefungen 43a - 43d dienen einerseits zur Aufnahme von Schmiermittel. Andererseits lässt sich durch die Vertiefungen ein besonders leichtgängiges Abwälzen der Kugeln in der Hülse erreichen, da durch sie ein Verklemmen der Kugeln vermieden und diese dadurch gut geführt werden können, ohne dass ein exakt kreisrunder Querschnitt der inneren Begrenzungsfläche zwingend erforderlich wäre.

Insbesondere der Darstellung von Fig. 3 kann entnommen werden, dass die in eine der Ausnehmungen 10a - 10d des Wagens 2 montierte Hülse 17 mit ihren beiden konisch geformten Enden 18, 19 über den Grundkörper 5 hervorsteht. Hierdurch ist sowohl die jeweilige Nut 31, 32 als auch der jeweilige Schlitz 33, 34 mit der Ausnehmung 35, 36 für die Montage von weiteren Bauteilen des Wagens zugänglich. Die Schlitze 33, 34 und die Ausnehmung 35, 36 bilden jeweils einen Teil einer Schnappverbindung aus. Mit Hilfe der Schnappverbindung kann an ein Ende der Hülse 17 ein Bauteil - an dem zumindest ein Teil eines Umlenkkanals angeformt ist, befestigt werden. Zudem kann hiermit eine Zentrierung der Hülse 17 gegenüber den beiden Umlenkkanälen erreicht werden.

Die Hülse sitzt mit den Stegen 21 auf einer Wandfläche 47 der jeweiligen Ausnehmung 10a - 10d des Grundkörpers 5 auf und ist dort aufgrund eines leichten Presssitzes zwischen den Stegen 21 und dem Grundkörper 5 gegen Bewegungen entlang ihrer Längsachse befestigt (vgl. z.B. Fig. 3). Zwischen den beiden Bereichen 48, 49, an denen die Stege 21 angeordnet sind, weist die Hülse 17 mit ihrer gesamten Umfangsfläche einen Abstand zur Ausnehmung 10a - 10d auf. Dadurch kann sich die Hülse 17 zwischen den Stegbereichen 48, 49 und quer zu ihrer Längsachse 26 in der Ausnehmung durchbiegen, bis ihre Umfangsfläche 20 mit der Wandfläche 47 in Kontakt kommt. Eine solche Bewegung kann beispielsweise aufgrund von Schwingungen entstehen, die durch die zirkulierenden Wälzkörper hervorgerufen werden.

In den Fig. 6 und 7 ist eine erfindungsgemässe Ausführungsform eines Wälzkörperumlaufs gezeigt, bei der eine gegenüber dem in den Fig. 2 bis 5 prinzipiell gleiche Hülse in der Ausnehmung des Rücklaufkanals angeordnet ist. Nachfolgend wird deshalb nur auf die Unterschiede der beiden Ausführungsformen eingegangen, wobei für an sich gleiche Elemente die gleichen Bezugszeichen wie beim Ausführungsbeispiel der Fig. 2 bis 5 verwendet werden.

Ein Unterschied besteht darin, dass hier die Hülse 17 weniger weit aus der Ausnehmung 10a herausragt. So ist in den beiden Fig. 6 und 7 zu erkennen, dass sich die umlaufenden Nuten 31, 32 vollständig in der Ausnehmung 10a befinden. Ausserdem können hier wagenseitige Laufflächen der Tragzone 11 und innere Teile der beiden Umlenkkanäle 12 in einem Kunststoffspritzverfahren direkt an den metallischen Grundkörper 5 angespritzt sein. Es kann bevorzugt sein, wenn bei der Durchführung dieses Verfahrens sich sämtliche Hülsen 17 bereits in den entsprechenden Ausnehmungen der Rücklaufkanäle befinden. Dadurch kann der eingespritzte Kunststoff auch die Enden 18, 19 der Hülsen 17 umgeben und die Hülsen in den Ausnehmungen zusätzlich fixieren. Der Kunststoff dringt hierzu - von einem Ende der Hülse gesehen - bis jeweils zum ersten Steg 21 in den Bereich zwischen der Wandfläche 47 der Ausnehmung und der entsprechenden Hülse 17 ein.

Zu einer guten Fixierung und Verankerung der Hülse 17 in ihrer Ausnehmung des Grundkörpers trägt insbesondere bei, dass der Kunststoff auch die beiden umlaufenden Nuten 31, 32 sowie die beiden Schlitze 33, 34 und Ausnehmungen 35, 36 ausfüllt. Alleine durch den hiermit erreichten Formschluss zwischen der Hülse und Kunststoffteilen 50, an denen jeweils eine innere Führungsfläche der Umlenkkanäle 12 ausgebildet ist, können Bewegungen der Hülse entlang ihrer Längsachse 26 vermieden werden. Bei dem Kunststoffspritzgiessverfahren wird ausserdem eine mit dem Kunststoffteil 50 des Umlenkkanals einstückig verbundene Zentriernase 51 erzeugt. Diese dient zur Zentrierung eines Bauteiles 52, an dem eine äussere Führungsfläche des Umlenkkanals 12 ausgebildet ist.

Die Stege 21 - insbesondere der jeweils erste Steg - übernimmt die Aufgabe einer Dichtung, um zu verhindern, dass Kunststoff in den Bereich eindringt, in dem die Hülse mit Abstand zur Wandfläche angeordnet sein soll. Damit der Kunststoff nicht ins Innere der Hülse eindringt, ist es selbstverständlich erforderlich, während des Einspritzens des Kunststoffes einen Kern in die Hülse einzuführen, der nach der Verfestigung des Kunststoffes wieder entfernt wird. Durch den Kern kann zudem eine Zentrierung der Hülse in ihrer Ausnehmung sichergestellt werden.

Bei beiden Ausführungsbeispielen ist es möglich, dass die umlaufenden Stege 21 über ihre gesamte Breite (Richtung entlang der Längsachse 26) unterbrochen sind. Es ist hierbei bevorzugt, wenn die Unterbrechungen nebeneinanderliegender Stege - in bezug auf die Umfangsrichtung der Hülse 17 - gegeneinander versetzt sind. Dadurch können - trotz der Unterbrechungen - die Stege die Funktion einer Dichtung gegen den Eintritt von Kunststoff in jenen Bereich erfüllen, in dem die Hülse durchbiegbar ist. Diese Ausgestaltung der Stege hat vor allem den Vorteil, dass die Stege elastisch verformbar sind und dadurch keine hohen Anforderungen an die Fertigungsgenauigkeiten - beispielsweise des Durchmessers der Ausnehmung oder der Stege - gestellt werden müssen.

## Patentansprüche

1. Wälzkörperumlauf (6) eines Wagens (2) einer Linearführung, umfassend einen Rücklaufkanal, einen Tragbereich (11) sowie zwei den Rücklaufkanal und den Tragbereich miteinander verbindende Umlenkkanäle (12), bei dem in dem Rücklaufkanal ein hülsenförmiges Führungsmittel (17) in einer Ausnehmung eines Grundkörpers (5) des Kanals angeordnet ist, und das Führungsmittel (17) mit einer Lauffläche für Wälzkörper (7) versehen ist, wobei das Führungsmittel des Rücklaufkanals zumindest entlang eines Abschnittes mit Abstand zur Wand (47) der Ausnehmung des Grundkörpers (5) angeordnet ist, **dadurch gekennzeichnet, dass** das Führungsmittel an zumindest einem seiner beiden Enden (18, 19) zur Fixierung in der Ausnehmung (10) mit Kunststoff (50) ganz oder teilweise umgossen ist.

2. Wagen (2) einer Linearbewegungsführung, welcher zur Anordnung auf einer Schiene (1) vorgesehen ist, der einen Mittelabschnitt und zwei sich jeweils an den Mittelabschnitt anschliessende Schenkel (3a, 3b) aufweist, wodurch der Wagen im Querschnitt im wesentlichen U-förmig ausgebildet ist, der Wagen im Bereich der beiden Schenkel zumindest jeweils einen Wälzkörperumlauf (6) nach Anspruch 1 aufweist.

3. Wagen nach Anspruch 2, **dadurch gekennzeichnet, dass** die Führungsmittel jeweils im Bereich des zumindest einen Abschnittes entlang seines gesamten Umfanges mit Abstand zu der entsprechenden Wandfläche (47) der Ausnehmung des Wagens angeordnet sind.

4. Wagen nach einem oder mehreren der Ansprüche 2-3, **dadurch gekennzeichnet, dass** die hülsenförmigen Führungsmittel an ihrer Aussenfläche (20) Zentrierungselemente (21) aufweisen, mit welchen jeweils die Position eines Führungselementes bezüglich einer Längsachse der Ausnehmung des Wagens bestimmt wird, in der das Führungsmittel angeordnet ist.

5. Wagen nach Anspruch 4, **dadurch gekennzeichnet, dass** die Zentrierungselemente - hinsichtlich der Länge des jeweiligen Führungsmittels - im Bereich der beiden äusseren Drittel (48, 49) des Führungsmittels angeordnet sind.

6. Wagen nach Anspruch 4 oder 5, **dadurch gekennzeichnet, dass** Zentrierungselemente (21) als ringförmige Zentrierungsstege ausgebildet sind, die sich über den gesamten Umfang des jeweiligen Führungsmittels erstrecken.

7. Wagen nach den Ansprüchen 2 und 4, **dadurch gekennzeichnet, dass** jedes Führungsmittel zwischen seinen Zentrierungselementen (21) mit Abstand zur Wand angeordnet ist.

8. Wagen nach einem oder mehreren der Ansprüche 2-7, **dadurch gekennzeichnet, dass** zumindest eines der hülsenförmigen Führungsmittel an seiner Wand zumindest eine Schmiermitteltasche (22) aufweist.

9. Wagen nach Anspruch 8, **dadurch gekennzeichnet, dass** die Schmiermitteltasche (22) des einen hülsenförmigen Führungsmittels als Nut ausgebildet ist.

10. Wagen nach Anspruch 8, **dadurch gekennzeichnet, dass** die zumindest eine Schmiermitteltasche (22) in jenem Abschnitt vorgesehen ist, in denen das Führungsmittel (17) mit Abstand zur Wandfläche angeordnet ist.

11. Wagen nach einem oder mehreren der Ansprüche 2-10, **dadurch gekennzeichnet, dass** in jenem Abschnitt, in dem ein Führungsmittel (17) mit Abstand zur Wandfläche angeordnet ist, in einer Schmiermitteltasche Schmiermittel vorhanden ist, wobei die Schmiermitteltasche durch die Wandfläche der Ausnehmung des Grundkörpers und durch die Umfangsfläche (20) des Führungsmittels begrenzt wird.

12. Wagen nach einem oder mehreren der Ansprüche 2-11, **dadurch gekennzeichnet, dass** das Führungsmittel (17) in seiner Wand (37) zumindest eine Durchtrittsöffnung (39) aufweist.

13. Wagen nach Anspruch 12, **dadurch gekennzeichnet, dass** eine Längserstreckung der zumindest einen Durchtrittsöffnung (39) im wesentlichen quer zu einer Längsachse (26) des hülsenförmigen Führungsmittels (17) verläuft.

14. Wagen nach einem oder mehreren der Ansprüche 12-13, **dadurch gekennzeichnet, dass** das Führungsmittel (17) biegeelastisch ist und Auslenkungen des Führungsmittels (17) zur Einleitung von Schmiermittel durch die zumindest eine Durchtrittsöffnung (39) in das Führungsmittel (17) genutzt wird.

15. Wagen nach Anspruch 12, **dadurch gekennzeichnet, dass** zwischen der Wandfläche (47) und dem Führungsmittel (17) Schmiermittel vorhanden ist, und die zumindest eine Durchtrittsöffnung (39) eine Grösse aufweist, durch die ein zur Einleitung von Schmiermittel in das Führungsmittel (17) vorgesehener Kapillareffekt entsteht.

16. Wagen nach Anspruch 11, **dadurch gekennzeichnet, dass** die Schmiermitteltaschen (22) eine Längserstreckung haben, die im wesentlichen parallel zu einer Längsachse des Rücklaufkanals verläuft.

17. Wagen nach einem oder mehreren der Ansprüche 2-16, **dadurch gekennzeichnet, dass** die Länge eines Führungsmittels (17) grösser ist als die Länge der entsprechenden Ausnehmung (10) im Wagen.

18. Wagen nach einem oder mehreren der Ansprüche 2-17, **dadurch gekennzeichnet, dass** ein hülsenförmiges Führungsmittel (17) zu seiner Fixierung in der Ausnehmung an beiden Enden (18, 19) mit Kunststoff (50) ganz oder teilweise umgossen ist.

19. Wagen nach Anspruch 18, **dadurch gekennzeichnet, dass** der an ein Ende (18, 19) eines hülsenförmiges Führungsmittels angegossene Kunststoff mit einem Umlenkkanal (50) jeweils einstückig verbunden ist.

20. Linearführung, umfassend eine Schiene (1) und einen auf der Schiene geführten Wagen (2), **gekennzeichnet durch** einen Wagen (2) gemäss einem oder mehreren der Ansprüche 2 bis 19.

## Claims

1. A roller circulation housing (6) for a carriage (2) for a linear guiding device comprising a return channel, a support area (11) and two deflector channels (12) connecting the return channel and the support area with one another, a sleeve-shaped guide means (17) being disposed in a recess of a base body (5) of the channel in the return channel, and the guide means (17) being provided with a roller surface for roller bodies (7), with the guide means of the return channel being disposed at least along a section at a distance to the wall (47) of the recess of the base body (5), **characterized in that** the guide means is completely or partly molded with plastic (50) on at least one of its two ends (18, 19) so as to be fixed in the recess (10).

2. A carriage (2) for a linear guiding device being adapted to be mounted on a rail (1), which comprises a central section and two side sections (3a, 3b) being respectively adjacent to the central section, whereby the carriage exhibits a substantially U-shaped cross section, the carriage comprising at least one roller body housing (6) according to claim 1 in the area of the two side sections.

3. The carriage according to claim 2, **characterized in that**, in each case, the guide means are disposed in the area of the at least one section along its entire periphery at a distance to the corresponding wall surface (47) of the recess of the carriage.

4. The carriage according to one or a plurality of claims 2-3, **characterized in that** the sleeve-shaped guide means comprise centering elements (21) at their outer surface (20) determining, in each case, the position of a guide element with regard to a longitudinal axis of the recess of the carriage, in which the guide means is disposed.

5. The carriage according to claim 4, **characterized in that** the centering elements, with regard to the length of the respective guide means, are disposed in the area of the two outer thirds (48, 49) of the guide means.

6. The carriage according to claim 4 or 5, **characterized in that** centering elements (21) are configured as annular centering bars extending across the entire periphery of the respective guide means.

7. The carriage according to claims 2 and 4, **characterized in that** each guide means is disposed between its centering elements (21) at a distance to the wall.

8. The carriage according to one or a plurality of claims 2-7, **characterized in that** at least one of the sleeve-shaped guide means comprises at least one lubricant pocket (22) at its wall.

9. The carriage according to claim 8, **characterized in that** the lubricant pocket (22) of the one sleeve-shaped guide means is configured as a groove.

10. The carriage according to claim 8, **characterized in that** the at least one lubricant pocket (22) is provided in the section, in which the guide means (17) is disposed at a distance to the wall surface.

11. The carriage according to one or a plurality of claims 2-10, **characterized in that** lubricant is present in a lubricant pocket in the section in which a guide means (17) is disposed at a distance to the wall surface, with the lubricant pocket being limited by the wall surface of the recess of the base body and by the peripheral surface (20) of the guide means.

12. The carriage according to one or a plurality of claims 2-11, **characterized in that** the guide means (17) comprises at least one passage opening (39) in its wall (37).

13. The carriage according to claim 12, **characterized in that** a longitudinal extension of the at least one passage opening (39) runs substantially transverse to a longitudinal axis (26) of the sleeve-shaped guide means (17).

14. The carriage according to one or a plurality of claims 12-13, **characterized in that** the guide means (17) is resiliently flexible and **in that** deflections of the guide means (17) are used for the introduction of lubricant into the guide means (17) through the at least one passage opening (39).

15. The carriage according to claim 12, **characterized in that** lubricant is present between the wall surface (47) and the guide means (17) and **in that** the at least one passage opening (39) is of a size, which causes a capillary effect provided for the introduction of lubricant into the guide means (17).

16. The carriage according to claim 11, **characterized in that** the lubricant pockets (22) have a longitudinal extension extending substantially parallel to a longitudinal axis of the return channel.

17. The carriage according to one or a plurality of claims 2-16, **characterized in that** the length of a guide means (17) is greater than the length of the corresponding recess (10) in the carriage.

18. The carriage according to one or a plurality of claims 2-17, **characterized in that** a sleeve-shaped guide means (17) is completely or partly molded with plastic (50) on both ends (18, 19) so as to be fixed in the recess.

19. The carriage according to claim 18, **characterized in that** the plastic injection-molded to an end (18, 19) of a sleeve-shaped guide means is, in each case, integrally connected with a deflector channel (12).

20. A linear guide, comprising a rail (1) and a carriage (2) guided on the rail, **characterized by** a carriage (2) according to one or a plurality of claims 2 to 19.

## Revendications

1. Rotation de corps de roulement (6) d'un chariot (2) d'un guide linéaire, comprenant un canal de retour, une zone portante (11) ainsi que deux canaux de renvoi reliant entre eux le canal de retour et la zone portante, dans laquelle un moyen de guidage (17) en forme de douille est disposé dans le canal de retour dans un évidement d'un corps de base (5) du canal, et le moyen de guidage (17) est doté d'une surface de roulement pour des corps de roulement (7), le moyen de guidage du canal de retour étant disposé au moins le long d'une partie à distance de la paroi (47) de l'évidement du corps de base (5), **caractérisée en ce que** le moyen de guidage est entouré tout ou partiellement de plastique (50) sur au moins l'une de ses deux extrémités (18, 19) pour la fixation dans l'évidement (10).

2. Chariot (2) d'un guidage de mouvement linéaire, qui est prévu pour l'agencement sur un rail (1), lequel présente une partie centrale et deux branches (3a, 3b) se raccordant chacune à la partie centrale, le chariot étant conçu sensiblement en U en section, le chariot présentant dans la zone des deux branches au moins à chaque fois une rotation de corps de roulement (6) selon la revendication 1.

3. Chariot selon la revendication 2, **caractérisé en ce que** les moyens de guidage sont disposés chacun dans la zone de la au moins une partie le long de son pourtour complet à distance de la surface de paroi (47) correspondante de l'évidement du chariot.

4. Chariot selon l'une quelconque ou plusieurs des revendications 2 - 3, **caractérisé en ce que** les moyens de guidage en forme de douille présentent sur leur surface extérieure (20) des éléments de centrage (21), avec lesquels à chaque fois la position d'un moyen de guidage par rapport à un axe longitudinal de l'évidement du chariot est déterminée, dans laquelle le moyen de guidage est disposé.

5. Chariot selon la revendication 4, **caractérisé en ce que** les éléments de centrage sont disposés, en ce qui concerne la longueur du moyen de guidage respectif, dans la zone des deux tiers (48, 49) extérieurs du moyen de guidage.

6. Chariot selon la revendication 4 ou 5, **caractérisé en ce que** des éléments de centrage (21) sont conçus comme des nervures de centrage de forme annulaire, qui s'étendent sur tout le pourtour du moyen de guidage concerné.

7. Chariot selon les revendications 2 et 4, **caractérisé en ce que** chaque moyen de guidage est disposé entre ses éléments de centrage (21) à distance de la paroi.

8. Chariot selon l'une quelconque ou plusieurs des revendications 2 - 7, **caractérisé en ce qu'**au moins l'un des moyens de guidage en forme de douille présente au moins une poche à lubrifiant (22) sur sa paroi.

9. Chariot selon la revendication 8, **caractérisé en ce que** la poche à lubrifiant (22) d'un moyen de guidage en forme de douille est conçue comme rainure.

10. Chariot selon la revendication 8, **caractérisé en ce que** la au moins une poche à lubrifiant (22) est prévue dans la partie dans laquelle le moyen de guidage (17) est disposé à distance de la surface de paroi.

11. Chariot selon l'une quelconque ou plusieurs des revendications 2 - 10, **caractérisé en ce que** dans chaque partie, dans laquelle un moyen de guidage (17) est disposé à distance de la surface de paroi, est présent du lubrifiant dans une poche à lubrifiant, la poche à lubrifiant étant limitée par la surface de paroi de l'évidement du corps de base et par la surface périphérique (20) du moyen de guidage.

12. Chariot selon l'une quelconque ou plusieurs des revendications 2 - 11, **caractérisé en ce que** le moyen de guidage (17) présente dans sa paroi (37) au moins un orifice de passage (39).

13. Chariot selon la revendication 12, **caractérisé en ce qu'**une extension longitudinale du au moins un orifice de passage (39) est agencée sensiblement transversalement à un axe longitudinal (26) du moyen de guidage (17) en forme de douille.

14. Chariot selon l'une quelconque ou plusieurs des revendications 12 - 13, **caractérisé en ce que** le moyen de guidage (17) est élastique en flexion et des déviations du moyen de guidage (17) sont utilisées pour l'introduction de lubrifiant par le au moins un orifice de passage (39) dans le moyen de guidage (17).

15. Chariot selon la revendication 12, **caractérisé en ce que** du lubrifiant est présent entre la surface de paroi (47) et le moyen de guidage (17) et le au moins un orifice de passage (39) présente une grandeur par laquelle se forme un effet capillaire prévu pour l'introduction de lubrifiant dans le moyen de guidage (17).

16. Chariot selon la revendication 11, **caractérisé en ce que** les poches à lubrifiant (22) ont une extension longitudinale qui est agencée sensiblement parallèlement à un axe longitudinal du canal de retour.

17. Chariot selon l'une quelconque ou plusieurs des revendications 2 - 16, **caractérisé en ce que** la longueur d'un moyen de guidage (17) est plus grande que la longueur de l'évidement (10) correspondant.

18. Chariot selon l'une quelconque ou plusieurs des revendications 2 - 17, **caractérisé en ce qu'**un moyen de guidage (17) en forme de douille est entouré tout ou partiellement de plastique pour sa fixation dans l'évidement sur les deux extrémités (18, 19).

19. Chariot selon la revendication 18, **caractérisé en ce que** le plastique coulé sur une extrémité (18, 19) d'un moyen de guidage en forme de douille est relié respectivement d'une seule pièce à un canal de renvoi (50).

20. Guide linéaire, comprenant un rail (1) et un chariot (2) guidé sur le rail, **caractérisé par** un chariot (2) selon l'une quelconque ou plusieurs des revendications 2 à 19.
